# EUROPEAN PATENT APPLICATION

(11) **EP 1 826 975 A1**
(43) Date of publication of application: **29.08.2007**
(21) Application number: 06256495.0
(22) Date of filing: 21.12.2006
(51) Int. Cl.: H04L 27/00, H04Q 7/38

(54) **Chaotic wireless communication apparatus for location awareness using spreading spectrum technology**

(30) Priority: 22.02.2006 KR 20060017211
(71) Applicant: Samsung Electro-Mechanics Co., Ltd., Suwon-si, Gyeonggi-do (KR)
(72) Inventor: Yang, Chang Soo, Sungnam Gyunggi-Do (KR); Lee, Jeong Suk, Pajoo Gyunggi-Do (KR); Cho, Sang Do, Sungnam Gyunggi-Do (KR); Du Lee, Kwang, Damyang-Gun Jeonlanam-Do (KR); Yang, Wan Cheol, Ansan Gyunggi-Do (KR); Na, Jong In, Gwanak-Gu Seoul (KR); Kim, Ki Hwan, Suwon Gyunggi-Do (KR); Park, Sang Gyu, Suwon Gyunggi-Do (KR); Lee, Sang Yub, Suwon Gyunggi-Do (KR)
(74) Representative: Powell, Timothy John

(57) **Abstract**

A chaotic wireless communication apparatus for transmitting/receiving data based on a chaotic signal is provided. The apparatus includes a chaotic Radio Frequency (RF) processing means and a digital modem. The chaotic RF processing means includes a chaotic RF receiving unit for extracting a spreading digital signal from an RF signal using a chaotic signal as a carrier signal, and a chaotic RF transmitting unit for transforming the spreading digital signal into the chaotic signal. The digital modem a digital demodulating unit for dispreading spreading digital data extracted from the chaotic RF receiving unit and creating information data to be received, and a digital demodulating unit for spreading information data to be transmitted and creating the spreading digital signal.

## Description

### RELATED APPLICATION

The present application is based on, and claims priority from, Korean Application Number 2006-17211, filed February 22, 2006, the disclosure of which is hereby incorporated by reference herein in its entirety.

### BACKGROUND OF THE INVENTION

### Field of the Invention

The present invention relates to a chaotic wireless communication apparatus for transmitting/receiving data based on a chaotic signal, and more particularly, to a chaotic wireless communication apparatus for location awareness, which can perform wireless communication with low cost and low power by applying a chaotic signal as a Radio Frequency (RF) carrier instead of a sine wave.

### Description of the Related Art

Generally, a wireless communication technology is classified into two technologies, a mobile communication technology and a short-range wireless communication service, by a distance that can provide related communication services. The mobile communication technology is a technology for providing a wireless communication service in a wide area. The short range wireless communication technology is a technology for providing the wireless communication service in a short range area such as home, offices, factories, warehouses and specific housing complexes.

In case of the mobile communication technology, service types thereof have changed a lot as the related technologies have been evolved. When the mobile communication technology introduced, a simple speech service was provided. Recently, a high speed wireless Internet communication system was introduced and commercialized according to the introduction of a digital wireless communication technology, thereby providing not only text services but also multimedia services. In case of the short range wireless communication technology, the short rage wireless communication was used for speech communication through a radiotelegraph or for transmitting simple data in the past. However, at the present time, various short range wireless connectivity solutions for transmitting and controlling various wireless data and transmitting multimedia data such as voice, audio and video was introduced according to the introduction of a digital communication technology and a semiconductor technology. In particular, it is expected that a wireless connectivity solution with a location awareness function will be essentially applied to a ubiquitous sensor network in near future.

A currently available location awareness technology is generally classified into a macro location awareness system and a micro location awareness system by a location awareness service range thereof. The macro location awareness system utilizes a Global Positioning System (GPS) and a mobile communication network for location awareness. Such a macro location awareness system can provide a location awareness service within the broadest region. The micro location awareness system provides the location awareness service for a limited location, such as an inside and outside of predetermined housing complexes, factories, offices, home, public places and congested regions. Generally, the macro location awareness system does not provide the service in an improper wireless environment such as an indoor place, a basement and a congested region. On the other hand, the micro location awareness system can provide the service in the indoor place and is highly precise.

As a currently known micro location awareness system, diverse location awareness schemes, for example, using an ultrasonic wave, an infrared ray, a stereo-scopic image, or a RF signal can be applied. The location awareness scheme using an RF signal can be used simultaneously for realizing the wireless communication and the location awareness differently from the schemes using the ultrasonic wave and the infrared rays. Also, the location awareness scheme using the RF signal has an excellent permeability against obstacles. Accordingly, many researches related to the location awareness scheme using the RF signal have been progressed.

Conventionally, wireless communication apparatuses applied to the location awareness system using the RF signal use the sine wave as the RF carrier, as like that applied to other fields. The conventional RF wireless communication system using the sine wave as the carrier requires a voltage control oscillator (VCO) for creating a frequency desired in a demodulating procedure, which is a procedure for recovering data included in the RF signal of the received sine wave type. The conventional RF wireless communication system also requires a mixer for mixing the frequency created in the voltage control oscillator and the RF signal of the sine wave type. A phase locked loop (PLL) circuit is also necessarily required to create control voltage for controlling the frequency created in the voltage control oscillator. As described above, since the wireless communication apparatuses using the conventional carrier of the sine wave type require many circuit components to recover data, there is a problem that the wireless communication apparatuses are very complicated. In addition, since greater electric power is required to drive the voltage control oscillator and the phase locked loop circuit, there is also a problem that consumption power of the wireless communication apparatus increases. The conventional wireless communication apparatus is not proper to be applied to the system essentially requiring a low power consumption characteristic such as a sensor network.

### SUMMARY OF THE INVENTION

Accordingly, the present invention is directed to a chaotic wireless communication apparatus for location awareness that substantially obviates one or more problems due to limitations and disadvantages of the related art.

An object of the present invention is to provide a chaotic wireless communication apparatus for location awareness, which can uses an on-off keying (OOK) based chaotic signal as a carrier of a Radio Frequency (RF) wireless communication.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a chaotic wireless communication apparatus for location awareness.

According to an aspect of the present invention, there is provided a chaotic wireless communication apparatus for location awareness, including: a chaotic Radio Frequency (RF) processing unit which includes a chaotic RF receiving unit for extracting a spreading digital signal to be received from an RF signal using a chaotic signal as a carrier signal, and a chaotic RF transmitting unit for transforming the spreading digital signal to be transmitted according to an on-off keying (OOK) method into the chaotic signal, which is the carrier signal; and a digital modem which includes a digital demodulating unit for dispreading spreading digital data extracted from the chaotic RF receiving unit and creating information data to be received, and a digital demodulating unit for spreading information data to be transmitted and creating the spreading digital signal.

The chaotic RF receiving unit may include a band-pass filter for selectively passing a desired frequency band of the RF signal using the chaotic signal as the carrier signal; an envelope detector for detecting an envelope of the RF signal using the chaotic signal passed in the band-pass filter as the carrier signal; and an analog/digital converter for transforming an envelope signal detected in the envelope detector into a digital signal.

The chaotic RF transmitting unit may include: a chaotic signal creator for creating a chaotic signal; a band-pass filter for having the chaotic signal not affect on other frequency band system and simultaneously blocking a proximity interference signal; and an on-off keying modulator for creating an RF signal which uses the chaotic signal as the carrier signal according to the on-off keying method by multiplying the spreading digital signal to be transmitted by the chaotic signal.

The chaotic RF transmitting unit may include: a chaotic signal creator for creating a chaotic signal when voltage is supplied, and being turned off when the voltage is blocked; and a power voltage switch for supplying/blocking power voltage to/from the chaotic signal creator according to the spreading digital signal to be transmitted, wherein the chaotic RF transmitting unit becomes the RF signal using the chaotic signal, in which output of the chaotic signal creator is directly transformed by the OOK method, as the carrier signal by supplying/blocking the power voltage to/from the chaotic signal creator according to the spreading digital signal to be transmitted.

The chaotic wireless communication apparatus for location awareness, may further include: a band-pass filter for passing a signal of a pre-set band among the chaotic signals outputted from the chaotic signal creator; and an amplifier for amplifying the chaotic signal passing the band-pass filter to have a predetermined gain.

The band-pass filter and the amplifier may be formed integrally in one piece.

The chaotic RF processing unit may further include: a filter for filtering the chaotic RF signal transmitted from the antenna and the chaotic RF signal transmitted to the antenna for transmission; and a switch for selectively connecting the filter to the chaotic RF receiving unit or the chaotic RF transmitting unit.

The chaotic RF processing unit may further include: a wakeup receiver for receiving a wakeup signal in a reception waiting state; and a direct current (DC) power controller for turning on/off the chaotic RF receiving unit and the chaotic RF transmitting unit according to the transmission/reception status of the chaotic wireless communication apparatus for location awareness.

The digital demodulating unit may include: a CDM code recognizer for determining a start point of the transmitted spreading digital signal; a CDM code detector for controlling a precise timing of the spreading digital signal and a CDM code for dispreading to extract exact data; and a CDM code despreader for dispreading the received spreading digital signal based on the CDM code and transforming the spreading digital signal into information data.

The digital demodulating unit may include: a spreading code creator for creating a pre-set spreading code; and a multiplier for multiplying the information data to be transmitted by the spreading code created in the spreading code creator, creating and transmitting the spreading digital signal to the chaotic RF transmitting unit.

The digital modem may further include: Media Access Control (MAC) hardware for forming the information data to be transmitted in a frame structure proper to a corresponding communication method, transmitting the information data to the digital modulating unit, and grasping the frame structure of the information data despreaded from the digital demodulating unit.

The digital modem may further include: a distance detecting unit for detecting a distance from other wireless communication apparatus based on the information data outputted from the digital demodulating unit.

The distance detecting unit may detect a distance to the other wireless communication apparatus based on a count value of a counter by operating the counter for measuring a distance at a frame start point of the information data in data transmission, and stopping the counter at the frame start point of the information data transmitted from other wireless communication apparatus responding to the transmitted information data frame. In this case, the counter may use a low clock rate of less than 300MHz.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment s of the invention and together with the description serve to explain the principle of the invention. In the drawings:
FIG. 1 is a block diagram showing a chaotic wireless communication apparatus for location awareness according to an exemplary embodiment of the present invention;
FIG. 2 is a block diagram illustrating the chaotic Radio Frequency (RF) receiver included in a chaotic RF processing block of the chaotic wireless communication apparatus for location awareness according to an exemplary embodiment of the present invention;
FIG. 3 is a block diagram illustrating a chaotic RF transmitting unit included in the chaotic RF processing block of the chaotic wireless communication apparatus for location awareness according to an exemplary embodiment of the present invention;
FIG. 4 is a block diagram illustrating the chaotic RF transmitting unit included in the chaotic RF processing block of the chaotic wireless communication apparatus for location awareness according to another exemplary embodiment of the present invention;
FIG. 5 is a block diagram illustrating the chaotic RF processing block of the chaotic wireless communication apparatus for location awareness according to an exemplary embodiment of the present invention;
FIG. 6 is a block diagram illustrating a digital modem of the chaotic wireless communication apparatus for location awareness according to an exemplary embodiment of the present invention; and
FIG. 7 shows a location awareness system, to which the chaotic wireless communication apparatus for location awareness of the present invention is applied.

### DETAILED DESCRIPTION OF THE INVENTION

Reference will now be made in detail to the preferred embodiments of the present invention, examples of which are illustrated in the accompanying drawings.

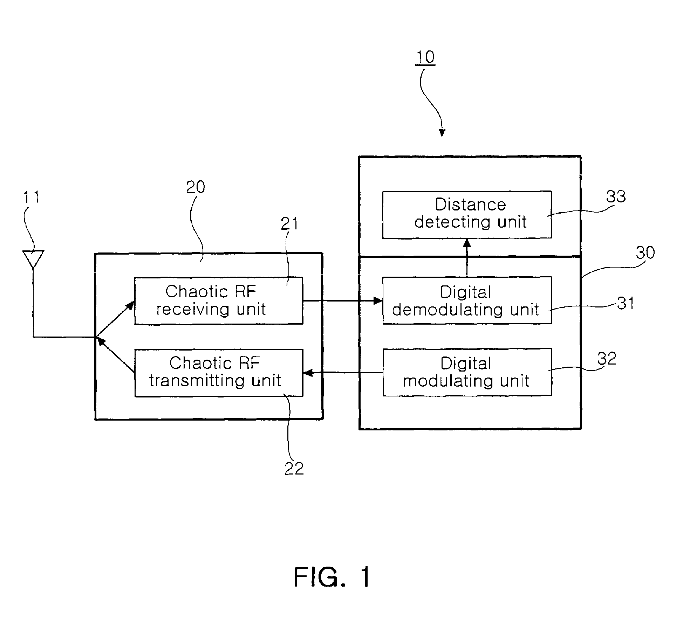

FIG. 1 is a block diagram showing a chaotic wireless communication apparatus for location awareness according to an exemplary embodiment of the present invention.

Referring to FIG. 1, a chaotic wireless communication apparatus 10 for location awareness includes a chaotic Radio Frequency (RF) processing block 20 and a digital modulating block 30. The chaotic RF processing block 20 includes a chaotic RF receiving unit 21 and a chaotic RF transmitting unit 22. The digital modulating block 30 includes a digital demodulating unit 31 and a digital modulating unit 32.

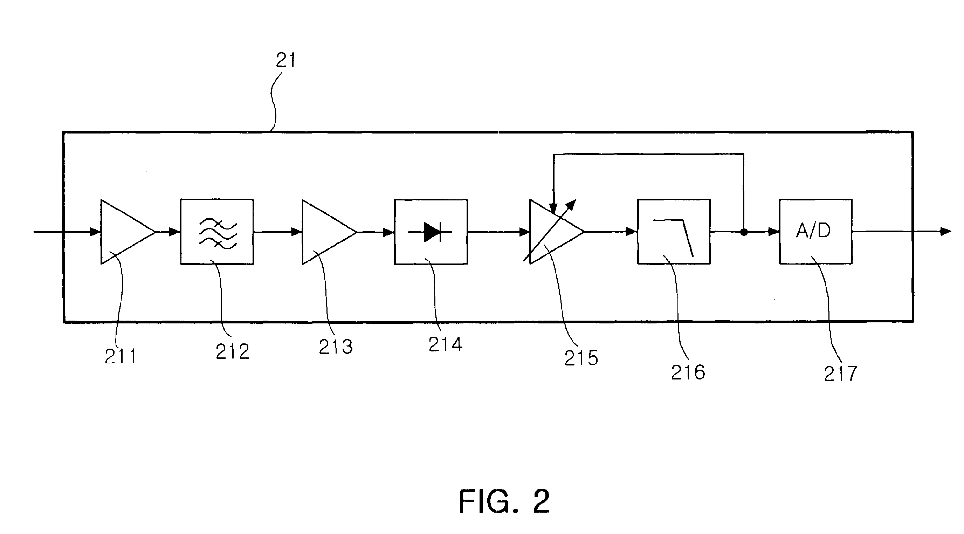

The chaotic RF receiving unit 21 in the chaotic RF processing block 20 extracts a target spreading digital signal from an RF signal using a chaotic signal as a carrier signal. The carrier signal is called as a chaotic RF signal, hereinafter. An exemplary embodiment of the chaotic RF receiving unit 21 is shown in FIG. 2.

FIG. 2 is a block diagram illustrating the chaotic RF receiving unit 21 included in the chaotic RF processing block 20 of the chaotic wireless communication apparatus 10 for location awareness according to the exemplary embodiment of the present invention.

As shown in FIG. 2, the chaotic RF receiving unit 21 includes at least one of amplifiers 211, 213 and 215, filters 212 and 216, an envelope detector 214, and an analog/digital converter 217.

The RF signal using the chaotic signal transmitted from an antenna 11 of FIG. 1 as the carrier is amplified through the amplifier 211. A signal of a desired frequency band can be selected by the filter 212 and amplified by the amplifier 213. It is preferred that the filter 212 is a band-pass filter for passing only chaotic signals of a desired pass band. It is more preferable that the filter 212 is a tunable filter which can change a desired pass band according to the need. An envelope of the chaotic signal passing the amplifier 213 is detected by the envelope detector 214. A detected envelope signal is amplified by the amplifier 215, more particularly, by an automatic gain control amplifier, by a desired level. Subsequently, the envelope signal is transformed into a digital signal in the analog/digital converter 217 through the low-pass filter 216 passing only baseband signals. A spreading digital signal spread and transmitted from the transmitting part is extracted from the received chaotic RF signal through a series of procedures.

That is, when the chaotic signal is used as the carrier, the desired digital signal can be extracted from the carrier signal by the simple configuration of the filter, the amplifier, the envelope detector and the analog/digital converter. In particular, since a voltage control oscillator and a phase locked loop (PLL) circuit consuming much power are not required, power consumption can remarkably decreases.

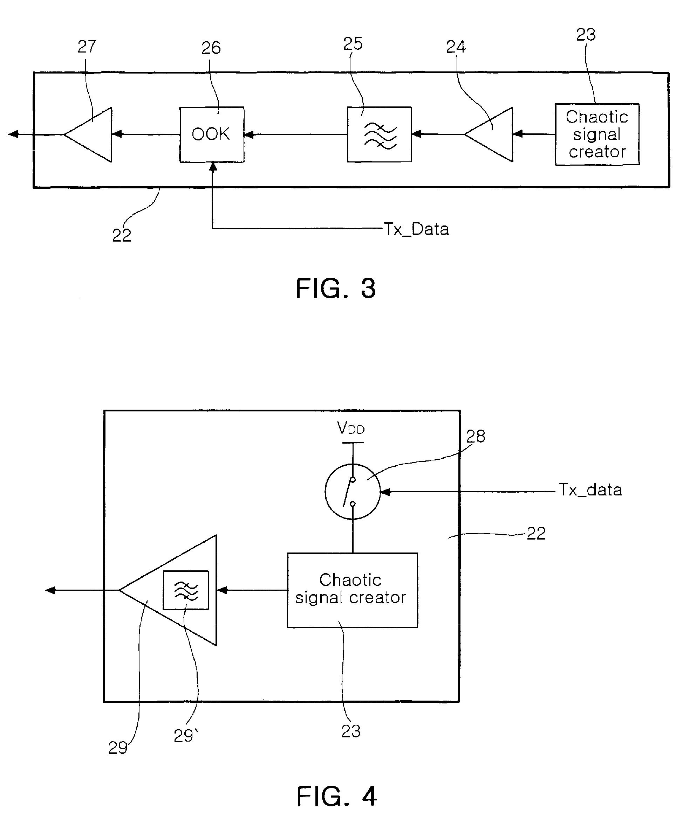

Referring to FIG. 1, the chaotic RF transmitting unit 22 in the chaotic RF processing block 20 transforms the spreading digital signal into the chaotic signal, i.e., the carrier signal, to be transmitted based on an on-off keying (OOK) method. The chaotic RF transmitting unit 22 will be described in more detail with reference to FIGs. 3 and 4.

FIG. 3 is a block diagram illustrating the chaotic RF transmitting unit 22 included in the chaotic RF processing block 20 of the chaotic wireless communication apparatus 10 for location awareness according to an exemplary embodiment of the present invention.

As shown in FIG. 3, the chaotic RF transmitting unit 22 includes a chaotic signal creator 221, an amplifier 222, a band-pass filter 223, an OOK modulator 224 and an amplifier 225. The chaotic signal creator 221 creates the chaotic signal. The amplifier 222 amplifies the chaotic signal. The band-pass filter 223 has the amplified chaotic signal not affect on other frequency band system and simultaneously blocks a proximity interference signal. The OOK modulator 224 performs transforming operations based on the on-off keying method by multiplying the spreading digital signal Tx_Data to be transmitted by the chaotic signal. The amplifier 225 amplifies the signal modulated in the modulator 224 by a predetermined gain.

FIG. 4 is a block diagram illustrating the chaotic RF transmitting unit 22 in the chaotic RF processing block 20 of the chaotic wireless communication apparatus 10 for location awareness according to another exemplary embodiment of the present invention.

As shown in FIG. 4, the chaotic RF transmitting unit 22 includes the chaotic signal creator 221 and a power voltage switch. When the voltage is supplied, the chaotic signal creator 221 creates the chaotic signal. When the voltage is blocked, the chaotic signal creator 221 is turned off. The power voltage switch supplies/blocks the power voltage to/from the chaotic signal creator according to the spreading digital signal Tx_Data. The chaotic RF transmitting unit 22 shown in FIG. 4 becomes the RF signal using the chaotic signal, in which output of the chaotic signal creator 221 is directly transformed by the OOK method, as the carrier signal by supplying/blocking the power voltage to/from the chaotic signal creator 221 according to the spreading digital signal Tx_Data to be transmitted.

Also, the chaotic RF transmitting unit 22 shown in FIG. 4 may further include a band-pass filter 227a and an amplifier 227. The band-pass filter 227a passes a pre-set band signal among the chaotic signals outputted from the chaotic signal creator 221. The amplifier 227 amplifies the chaotic signal passing the band-pass filter 227a to have a predetermined gain. The band-pass filter 227a and the amplifier 227 can be integrally formed as a single unit.

The chaotic RF transmitting unit 22 shown in FIG. 4 is operated only when the spreading digital signal Tx_Data to be transmitted by the chaotic signal creator 221 is 1. Accordingly, it is possible to remarkably decrease power consumption in comparison with the chaotic RF transmitting unit 22 of FIG. 3 where the chaotic signal creator is continuously operated. Also, if the spreading digital signal TX_Data is 0, the chaotic signal creator is not driven. Accordingly, it is possible to exactly output 0 without being affected by coupling. Accordingly, it can remove a spike phenomenon by adopting an individual OOK modulator, where the spike phenomenon is generated by impendence variation when the OOK modulator is turned on/off.

The chaotic RF transmitting unit shown in FIG. 4 is described in Korean Patent Application No. 10-2005-0077369, which is filed on August 23, 2005 by the applicant of the present invention and discloses a transmission apparatus based on a chaotic signal.

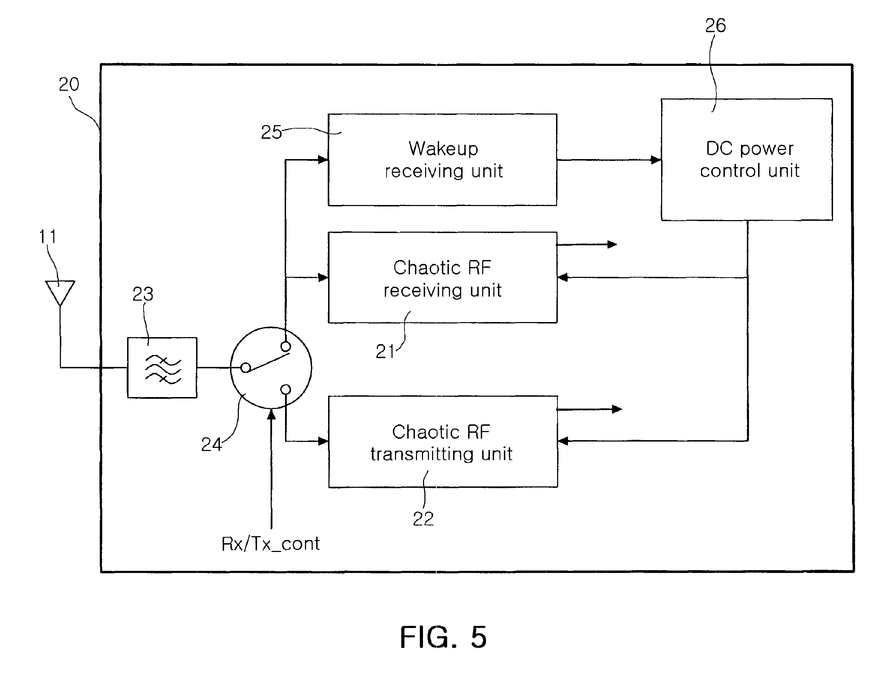

The chaotic RF processing block 20 may further include a filter, a switch, a wakeup receiver and a direct current (DC) power controller. The filter filters the chaotic RF signal transmitted from the antenna 11 and the chaotic RF signal transmitted to the antenna 11 for transmission. The switch selectively connects the filter to the chaotic RF receiving unit 21 or the chaotic RF transmitting unit 22. The wakeup receiver receives a wakeup signal in a reception waiting state to decrease consumption power. The DC power controller controls of/off of the chaotic RF receiving unit 21 and the chaotic RF transmitting unit 22. A detailed formation of the chaotic RF processing block 20 is shown in FIG. 5.

FIG. 5 is a block diagram illustrating the chaotic RF processing block of the chaotic wireless communication apparatus for location awareness according to an exemplary embodiment of the present invention.

Referring to FIG. 5, the chaotic RF processing block 20 of the chaotic wireless communication apparatus for location awareness further includes a filter 23 and a switch 24. The filter 23 filters the chaotic RF signal transmitted from the antenna 11 and the chaotic RF signal transmitted to the antenna 11. The switch 24 selectively connects the filter 23 to the chaotic RF receiving unit 21 or the chaotic RF transmitting unit 22. Also, the chaotic RF processing block 20 further includes a wakeup receiving unit 25 and a DC power control unit 26. The wakeup receiving unit 25 receives the wakeup signal in a reception waiting state. The DC power control unit 26 supplies or blocks power of the chaotic RF receiving unit 21 and the chaotic RF transmitting unit 22 according to the transmission/reception state.

When the chaotic wireless transmission/reception apparatus for location awareness is in a waiting state, the wakeup receiving unit 25 checks continuously or periodically whether the wakeup signal is received or not. In the waiting state, the DC power control unit 26 turns off the chaotic RF receiving unit 21 and the chaotic RF transmitting unit 22 to maximally decrease power consumption. When the wakeup receiving unit 25 receives the wakeup signal, the DC power control unit 26 turns on the chaotic RF receiving unit 21 and receives the chaotic RF signal transmitted from the antenna. When the chaotic wireless transmission/reception apparatus for location awareness transmits the chaotic RF signal, the DC power control unit 26 can turn on the chaotic RF transmitting unit 22 and turn off the chaotic RF receiving unit 21. As described above, the present invention can decrease power consumption by selectively turning off/on the chaotic RF receiving unit 21 and the chaotic RF transmitting unit 22 according to the transmission/reception status by using the DC power control unit 26.

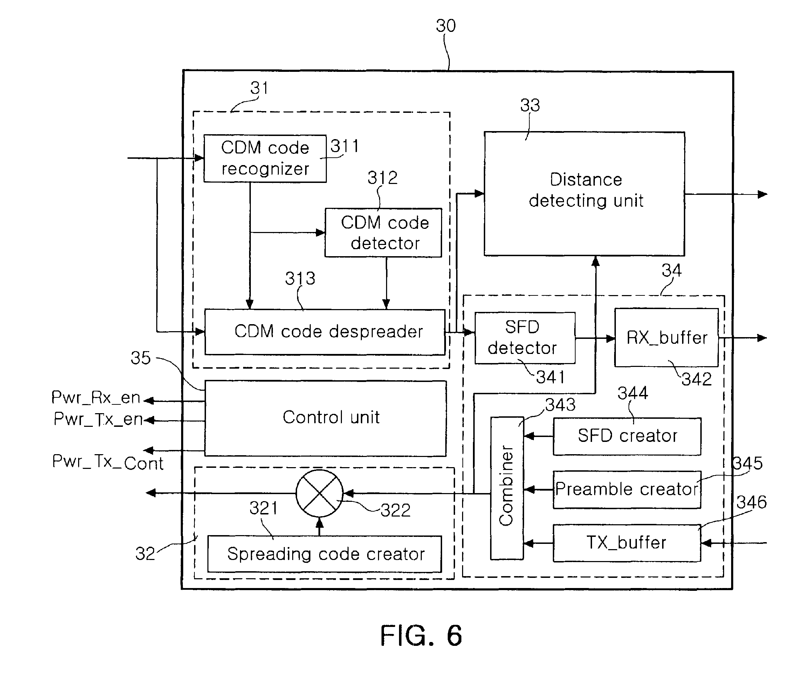

FIG. 6 is a block diagram illustrating a digital modem of the chaotic wireless communication apparatus for location awareness according to an exemplary embodiment of the present invention.

Referring to FIG. 6, the digital modem 30 of the chaotic wireless communication apparatus for location awareness includes the digital demodulating unit 31 and the digital modulating unit 32. The digital demodulating unit 31 creates information data to receive by despreading the spreading digital data extracted from the chaotic RF receiving unit 21 of FIG. 1. The digital modulating unit 32 creates the spreading digital signal by spreading information data to be transmitted. In addition, the digital modem 30 can further include a distance detecting unit 33 and MAC hardware 34. The distance detecting unit 33 measures a distance between two communication apparatuses based on the data created in the digital demodulating unit 31. The MAC hardware 34 reorganizes a transmission data form in a frame structure proper to a corresponding wireless communication environment and determines frame start of the received data to receive exact data.

To be more specific, the digital demodulating unit 31 includes a CDM code recognizer 311, a CDM code detector 312 and a CDM code despreader 313. The CDM code recognizer 311 determines a start point of the spreading digital signal transmitted form the chaotic RF receiving unit 21 of FIG. 1. The CDM code detector 312 controls a precise timing to extract exact data. The CDM code despreader 313 despreads the received spreading digital signal and transforms the spreading digital signal into information data.

The digital modulating unit 32 multiplies a spreading code created in a spreading code creator 321 by information data to be transmitted by the multiplier 322, creates and transmits a spreading digital signal to the chaotic RF transmitting unit 22 of FIG. 1 in order to secure reliable data transmission which is strong to fading in a wireless environment.

The information data to be transmitted/received through the wireless communication apparatus of the present invention has a frame structure proper to a corresponding communication method. The MAC hardware 34 forms the information data to be transmitted in a frame structure proper to the communication method and grasps the frame structure from the information data.

To be specific, in data transmission, the MAC hardware 34 includes a Tx_buffer 346, a preamble creator 345, an SFD creator 344 and a combiner 343. The Tx_buffer 346 temporally stores the data to be transmitted. The preamble creator 345 creates a preamble recording diverse information to know the start of the information data in a receiving part. The SFD creator 344 creates a sudden frequency deviation (SFD) notifying a start point of the frame. The combiner 343 combines data stored in the preamble, the SFD and the Tx_buffer 346 and creates the information data of the frame structure. In data transmission, the MAC hardware 34 includes an SFD detector 341 and an Rx_buffer 342. The SFD detector 341 detects the start of the frame from the despreaded information data in the digital demodulating unit 31 and outputs a corresponding frame. The Rx_buffer 342 temporally stores the data frame outputted in the SFD detector 341 and smoothly transmits the stored data frame to an upper protocol stack.

The digital modem 30 of the present invention includes a distance detecting unit 33 for detecting a distance between two wireless communication apparatuses to aware a location. The distance detecting unit 33 measures the distance between two wireless communication apparatuses and has two functions of a master and a slave. A master wireless communication apparatus operates a counter for measuring a distance at a frame start point of the information data in data transmission, responds to the transmitted information data frame and stops the counter at the frame start point of the information data transmitted from a slave wireless communication apparatus. The distance detecting unit 33 can measure a distance based on a counter value. A method using the impulse signal was conventionally adopted as a distance detecting method of the distance detecting unit 33. The distance detecting method using the impulse signal has an excellent precision, but the reception apparatus is very complicate to receive a short impulse. Therefore, it is preferred that a method using a low clock rate of less than 100MHz is adopted in the present invention to decrease complexity.

In addition, the digital modem 30 may further include a control unit 35 for determining a pass band of diverse tunable filters included in the chaotic RF processing block 20 of FIG. 1 and controlling power on/off of the chaotic RF receiving unit 21 and the chaotic RF transmitting unit 22 of FIG. 1.

Meanwhile, the present invention may further include a Media Access Control (MAC) system (not shown). The MAC system may include diverse primitive/setting unit/control unit for driving, setting up and controlling the wireless communication apparatus of the present invention. The MAC system can be determined in conformity to a standard of the wireless communication method used by the wireless communication apparatus of the present invention. Also, it is preferred that the present invention is applied to a standard of 812.15.4a. For example, the MAC system applied to the wireless communication apparatus of the present invention may includes a ranging primitive, a communication setting unit, an RF control unit and a networking primitive. The ranging primitive transmits the distance information detected from the distance detecting unit 33 of FIG. 1 to a location operating block. The communication setting unit previously sets up a communication related-register to communicate with the communication apparatus. The RF control unit controls operation of the chaotic RF transmitting unit and the chaotic RF receiving unit. The networking primitive smoothly interface with a network layer for making network communication possible.

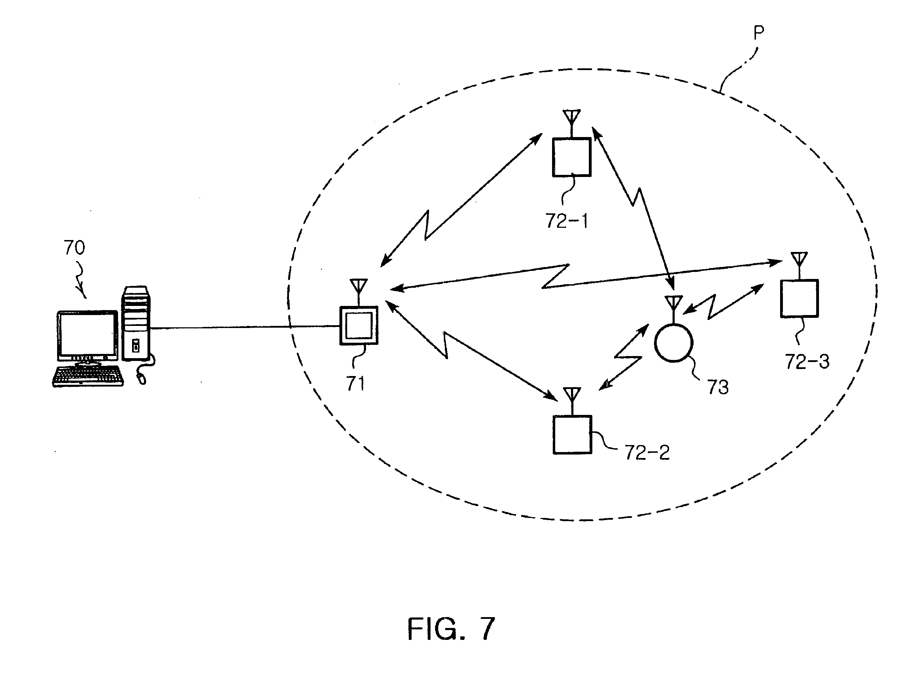

FIG. 7 shows a location awareness system, to which the chaotic wireless communication apparatus for location awareness of the present invention is applied.

The chaotic wireless communication apparatus for location awareness of the present invention can be applied to all of a coordinator 71, anchors 72-1 to 72-1 and a mobile object 73 included in the inside of a short distance network P, to which the location awareness shown in FIG. 7 can be applied. The mobile object 73 is an object of the location awareness.

In an example of the location awareness system shown in FIG. 7, at least three anchors 72-1 to 72-3 applying the wireless communication apparatus of the present invention individually communicates with the mobile object 73 by using the chaotic signal as the carrier signal. In this procedure, the anchors 72-1 to 72-3, respectively, detect a distance from the mobile object 73 by the distance detecting unit 33 of FIG. 1. That is, information data packets for detecting distances from the anchors 72-1 to 72-3 is transmitted to the mobile object 73. As a response to the packet, the mobile object 73 transmits a response packet to the anchors 72-1 to 72-3. Accordingly, the anchors 72-1 to 72-3 can respectively detect the distances to the mobile object 73 according to a counting method using the low clock by the distance detecting unit 33 of FIG. 1.

The distance information generated by the anchors 72-1 to 72-3 is transmitted to the coordinator 71 using the chaotic signal as the carrier signal. The coordinator 71 collects the distance information transmitted from each of the anchors 72-1 to 72-3 and transmits the distance information to an individual server 70. In thin procedure, the coordinator 71 can detect a location of the mobile object 73 by performing operation according to a predetermined algorithm based on the distance information transmitted from the anchors 72-1 to 72-3. In this case, the coordinator 71 may further includes a location operating unit including diverse algorithms, e.g., an algorithm for correcting a location, an algorithm for estimating a location and an algorithm for preventing a location error, in the chaotic wireless communication apparatus of the present invention. In the system of another example, the coordinator 71 transmits the distance information transmitted from each of the anchors 72-1 to 72-3 to the server 70 and the location operation can be performed in the server 70.

The present invention can remarkably decrease complexity by using the chaotic signal of a noise form without a phase as the carrier signal in comparison with the conventional wireless communication apparatus using the sine wave as the carrier.

In the present invention, a local oscillator, a mixer and a PLL circuit are not used and wireless communication is possible only by simple demodulation. Accordingly, it is possible to decrease power consumption and a unit cost of production in comparison with the conventional wireless communication apparatus. Also, the present invention can be miniaturized.

The present invention can also decrease complexity of constitutional elements for detecting a distance by using the low clock rate of less than 100MHz as the counter differently from the conventional impulse method.

It will be apparent to those skilled in the art that various modifications and variations can be made in the present invention. Thus, it is intended that the present invention covers the modifications and variations of this invention provided they come within the scope of the appended claims and their equivalents.

## Claims

1. A chaotic wireless communication apparatus for location awareness, comprising:
a chaotic Radio Frequency (RF) processing means which includes a chaotic RF receiving unit for extracting a spreading digital signal to be received from an RF signal using a chaotic signal as a carrier signal, and a chaotic RF transmitting unit for transforming the spreading digital signal to be transmitted according to an on-off keying (OOK) method into the chaotic signal, which is the carrier signal; and
a digital modem which includes a digital demodulating unit for dispreading spreading digital data extracted from the chaotic RF receiving unit and creating information data to be received, and a digital demodulating unit for spreading information data to be transmitted and creating the spreading digital signal.

2. The apparatus of claim 1, wherein the chaotic RF receiving unit includes:
a band-pass filter for selectively passing a desired frequency band of the RF signal using the chaotic signal as the carrier signal;
an envelope detector for detecting an envelope of the RF signal using the chaotic signal passed in the band-pass filter as the carrier signal; and
an analog/digital converter for transforming an envelope signal detected in the envelope detector into a digital signal.

3. The apparatus of claim 1, wherein the chaotic RF transmitting unit includes:
a chaotic signal creator for creating a chaotic signal;
a band-pass filter for having the chaotic signal not affect on other frequency band system and simultaneously blocking a proximity interference signal; and
an on-off keying modulator for creating an RF signal which uses the chaotic signal as the carrier signal according to the on-off keying method by multiplying the spreading digital signal to be transmitted by the chaotic signal.

4. The apparatus of claim 1, wherein the chaotic RF transmitting unit includes:
a chaotic signal creator for creating a chaotic signal when voltage is supplied, and being turned off when the voltage is blocked; and
a power voltage switch for supplying/blocking power voltage to/from the chaotic signal creator according to the spreading digital signal to be transmitted,
wherein the chaotic RF transmitting unit becomes the RF signal using the chaotic signal, in which output of the chaotic signal creator is directly transformed by the OOK method, as the carrier signal by supplying/blocking the power voltage to/from the chaotic signal creator according to the spreading digital signal to be transmitted.

5. The apparatus of claim 4, further comprising:
a band-pass filter for passing a signal of a pre-set band among the chaotic signals outputted from the chaotic signal creator; and
an amplifier for amplifying the chaotic signal passing the band-pass filter to have a predetermined gain.

6. The apparatus of claim 5, wherein the band-pass filter and the amplifier are integrally formed in a single unit.

7. The apparatus of claim 1, wherein the chaotic RF processing means further includes:
a filter for filtering the chaotic RF signal transmitted from the antenna and the chaotic RF signal transmitted to the antenna for transmission; and
a switch for selectively connecting the filter to the chaotic RF receiving unit or the chaotic RF transmitting unit.

8. The apparatus of claim 1, wherein the chaotic RF processing means further includes:
a wakeup receiver for receiving a wakeup signal in a reception waiting state; and
a direct current (DC) power controller for turning on/off the chaotic RF receiving unit and the chaotic RF transmitting unit according to the transmission/reception status of the chaotic wireless communication apparatus for location awareness.

9. The apparatus of claim 1, wherein the digital demodulating unit includes:
a CDM code recognizer for determining a start point of the transmitted spreading digital signal;
a CDM code detector for controlling a precise timing of the spreading digital signal and a CDM code for dispreading to extract exact data; and
a CDM code despreader for dispreading the received spreading digital signal based on the CDM code and transforming the spreading digital signal into information data.

10. The apparatus of claim 1, wherein the digital demodulating unit includes:
a spreading code creator for creating a pre-set spreading code; and
a multiplier for multiplying the information data to be transmitted by the spreading code created in the spreading code creator, creating and transmitting the spreading digital signal to the chaotic RF transmitting unit.

11. The apparatus of claim 1, wherein the digital modem further includes:
Media Access Control (MAC) hardware for forming the information data to be transmitted in a frame structure proper to a corresponding communication method, transmitting the information data to the digital modulating unit, and grasping the frame structure of the information data despreaded from the digital demodulating unit.

12. The apparatus of claim 1, wherein the digital modem further includes:
a distance detecting unit for detecting a distance from other wireless communication apparatus based on the information data outputted from the digital demodulating unit.

13. The apparatus of claim 12, wherein the distance detecting unit detects a distance to the other wireless communication apparatus based on a count value of a counter by operating the counter for measuring a distance at a frame start point of the information data in data transmission, and stopping the counter at the frame start point of the information data transmitted from other wireless communication apparatus responding to the transmitted information data frame.

14. The apparatus of claim 13, wherein the counter uses a low clock rate of less than 300MHz.
